# EUROPEAN PATENT APPLICATION

(11) **EP 0 978 932 A1**
(43) Date of publication of application: **09.02.2000**
(21) Application number: 98870176.9
(22) Date of filing: 06.08.1998
(51) Int. Cl.: H02K 41/06, F04C 2/22, F04C 15/00

(54) **Device having a rotor and a stator**

(71) Applicant: S.C. NDR Management S.r.l., Constanza (RO)
(72) Inventor: De Vadder, Paul Alfons Dominique, Vaduz (LI); De Bock, Guido Prosper Richienne, 2440 Geel (BE); Allaert, Hendrik Marie Marcel Eduard, 9100 Sint-Niklaas (BE)
(74) Representative: Van Straaten, Joop

(57) **Abstract**

Device, such as a device for compressing fluids or for refrigeration, comprises a rotor (1) in a rotor chamber (2) in a stator. The rotor performs in operation a cyclic movement which movement comprises a rotational component (ω) and a translational component (T). The rotor has means for generating a rotor magnetic field and the stator has means (3) for generating a stator electro-magnetic field which extends in the rotor chamber. In operation the stator electro-magnetic field creates a force field applied to the rotor which field is synchronous with the movement of the rotor, the force field comprising a rotational as well as a translational component. Preferably the stator field is generated by electro-magnets which can be magnetically coupled and decoupled.

## Description

The invention relates to a device comprising a rotor in a rotor chamber in a stator, the rotor performing in operation a cyclic movement which movement comprises a rotational component and a translational component.

Devices of the above mentioned type are known. In the known devices the rotor performs a cyclic movement combining a rotational movement with a translational movement. The rotor has an elongated shape, and the movement is such that the ends of the elongated shaped rotor are very close to an inside wall of the rotor chamber during the movement. During the movement the rotor chamber is divided into two sub-spaces by the rotor. Each sub-space has an in- or outlet. The rotor chamber is a heart-shaped. Such a shape is usually called cardioidally shaped.

Such devices are used for or in for examples in pumps or compressors. In the known exemplary devices the rotor is driven by a driving axle.

This axle is driven by a motor separate from the device. Such constructions are cumbersome, and a substantial amount of energy is lost. The driving axle is a source of problems such as seal leakage, friction and wear.

It is an object of the invention to provide a device as described in the opening paragraph in which the mentioned problems are lessened or overcome.

To this end the device in accordance with the invention is characterised in that the rotor is provided with means for generating a rotor magnetic field, and the stator is provided with means for generating a stator magnetic field which extends in the rotor chamber, and the device is provided with means for varying the stator magnetic field for creating in operation a force field applied to the rotor which is synchronous with the movement of the rotor comprising a rotational as well as a translational component.

Within the concept of the invention 'magnetic field' is to be interpreted broadly. The magnetic field may comprise more than two poles, and may comprise dipole as well as multipole components, and components that do not change in time and position as well as components that do.

The invention is based on the insight that by driving the rotor by an magnetic force field generated inside the rotor chamber due to the interaction of rotor and stator magnetic fields, and synchronising the force field acting on the rotor with the movement of the rotor, a much more compact device can be provided, and friction can be substantially reduced. Furthermore a device in accordance with the invention does not need moving parts which are present in the rotor chamber as well as outside the rotor chamber. Such moving parts are in conventional designs a source of friction and thus reduction of efficiency and of other problems, such as leakages or possible contamination of the rotor chamber.

In a device in accordance with the invention the interaction between the varying rotor magnetic field and the stator magnetic field create in operation a force field inside the rotor chamber acting on the rotor, which force field is synchronous with the movement of the rotor and has a cyclic rotational component as well as a cyclic translational component. The fact that both components of the movement are provided for by an magnetic force field enables, in comparison with known devices, a much more compact design and a strong reduction of friction and thus an increase in efficiency. The driving forces are created in situ and are not, as in known devices, derived from forces (such as forces acting on a rotating axis) acting outside the rotor chamber. This enables a reduction in size of the device as well as a reduction in transfer losses, and thus an increase in efficiency.

Preferably the means for generating a stator magnetic field comprises a number of electromagnets for generating magnetic poles and selection means for selectively providing magnetic couplings between the electromagnets, the selection being dependent on the position of the rotor in the rotor chamber.

By selectively magnetically coupling the electromagnets the stator magnetic field can be varied. By having the selection dependent on the position of the rotor in the rotor chamber, synchronisation of the force field acting on the rotor to the movement of the rotor is greatly simplified.

Preferably the selection means comprise a layer of powder or liquid comprising a magnetisable material coupled to or in close proximity to a number, or preferably each of the electromagnets and means to selectively create electromagnetic barriers in the layer. The magnetisable material in the layer align along the field lines and couple the fields generated by electromagnets. Electromagnetic barriers, however, prevent such alignment and sever the electromagnetic coupling between electromagnets. By selectively creating electromagnetic barriers selective coupling is thus achievable.

Preferably the means to create electromagnetic barriers comprise means to apply an electric field of high strength locally to the layer. Such electric fields provide a capacitance effect between the means and the layer. This capacitance effect prevents magnetic coupling between electromagnets at either side of the capacitance and thus provides an electromagnetic barrier. Such electric fields can be created and removed in high frequency so that a very fast and efficient selection is possible.

Preferably the magnetisable material exhibits a small index for the hysterisis loss, preferably less than 6 KJ/m3.

If the index for the hysterisis loss is larger the coupling between the electromagnets is too weak. As a result the magnetic fields generated by the electromagnets extend to a greater degree in surrounding parts of the stator, inducing Eddy currents therein. This results in increased energy losses in the stator and a higher temperature of the stator.

Preferably the layer comprises a powder in granular form.

Powder in granular form provides for an increased capacitance effect, thus increasing the barrier effect and the efficiency of the device.

Preferably the device is provided with an inert medium in contact with the layer. This reduces the risk that the magnetisable material reacts with the atmosphere inside the stator, such reactions could change the magnetic properties of the magnetisable material and thereby influence detrimentally the magnetic coupling provided by the layer. Inert media are for instance helium or argon. Helium is especially preferred because of its extreme inertness and favourable electrical properties.

Preferably the means for generating a rotor magnetic field comprise permanent magnets at the ends of the rotor and a number of electromagnets at the sides of the rotor, and means for reversing currents through the electromagnets. Such an arrangement is a simple arrangement. The permanent magnets can provide mainly for the rotational component of the movement of the rotor, the electromagnets being able to provide mainly for the translational movement.

Preferably the number of electromagnets are adapted to generate in operation a number of pairs of magnetic poles along the sides of the rotor, the strength of the pairs decreasing from the centre of the side of the rotor to an end of the rotor.

Such an arrangement is relatively simple and well suited for creating the force field.

Preferably the stator is provided with means for measuring the position of the rotor and means for providing a measurement signal comprising information on the position of the rotor in the rotor chamber, and with means for supplying the measurement signal to the means for varying the stator magnetic field.

The information on the position of the rotor is supplied via the measurement signal to the means for varying the stator magnetic field. Such information allows for a better synchronisation, which increases the efficiency of the device and reduces the risk of misaligment of the rotor and stator in respect of each other.

Preferably, the means for measuring the position of the rotor comprise optical sensors, e.g. for locally measuring the distance between the rotor and stator. Using optical sensors has the advantage that the relative position of rotor and stator is measured by means of a non-contact measurement. Contact measurement may induce damages to rotor and/or stator thus reducing the efficiency and/or life-time of the device. Electrical non-contact measurement may induce stray signals which may impair the functioning of the device. Optical sensors also allow for precise measurement of the position.

Preferably, the optical sensors comprise means for emitting distinguishable light signals and receiving means for receiving said light signals. Using distinguishable light signals and corresponding means has the advantage that a much more detailed and accurate measurement of data is possible, which increases the accuracy and/or the speed of measurement. Preferably the light signals are of different colours and the receiving means are sensitive to said colours.

Preferably, the optical sensors comprise optical fibres. The light source(s) as well as the measurement devices can be positioned at some distance from the rotor, which has the advantage that inaccuracies in the measurement caused by or generated by the movement of the rotor are reduced and that possible interference of signals generated by the light source on the movement of the rotor are also reduced.

Preferably the device comprises correction means to correct the relative position of the rotor in dependence on the measurement signal provided by the means for measuring the position of the rotor and the stator with respect to each other. Such correction reduces friction and improves the driving, thus improving the efficiency of the device.

These and further aspects of the invention will below be described, illustrated by means of the drawings.

In the drawings:
Fig. 1 schematically shows a device in accordance with the invention.
Fig. 2 schematically shows the movement of the rotor in the rotor chamber.
Fig. 3 shows a rotor having means for generating a rotor magnetic field.
Fig. 4 shows means for generating a stator magnetic field.
Fig. 5 shows in more detail a device as shown in figure 1.
Fig. 6 schematically shows means for selectively providing magnetic couplings between electromagnets.
Figs. 7a to 7c show in more detail a preferred embodiment of the means shown in Fig. 6.
Fig. 8 schematically shows means for providing a measurement signal comprising information on the position of the rotor in the rotor chamber, in this example optical means.

The drawings are schematic and not to scale. The same elements in the drawings are, as a rule, indicated by the same reference numbers.

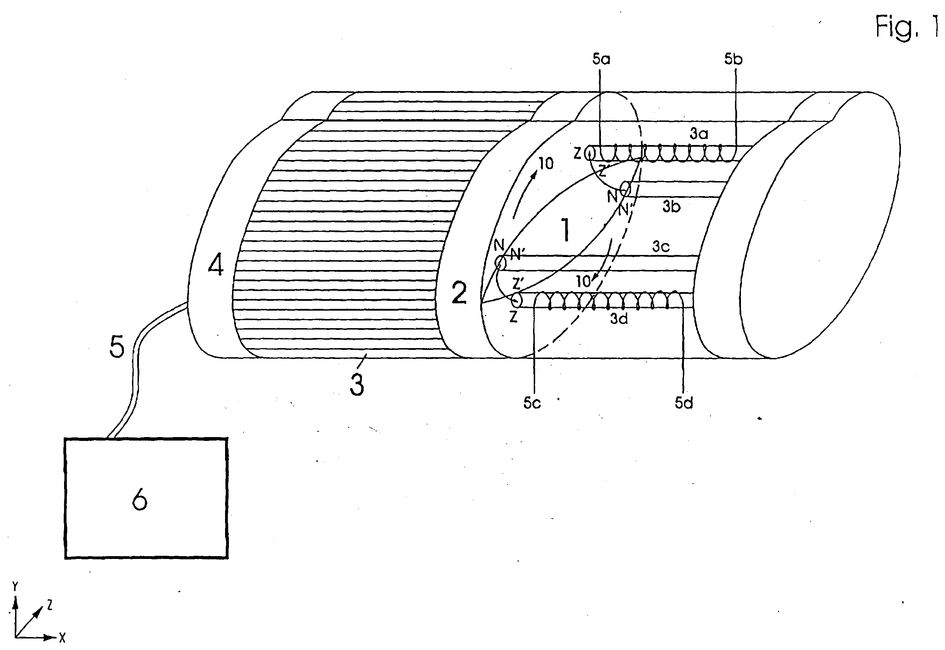

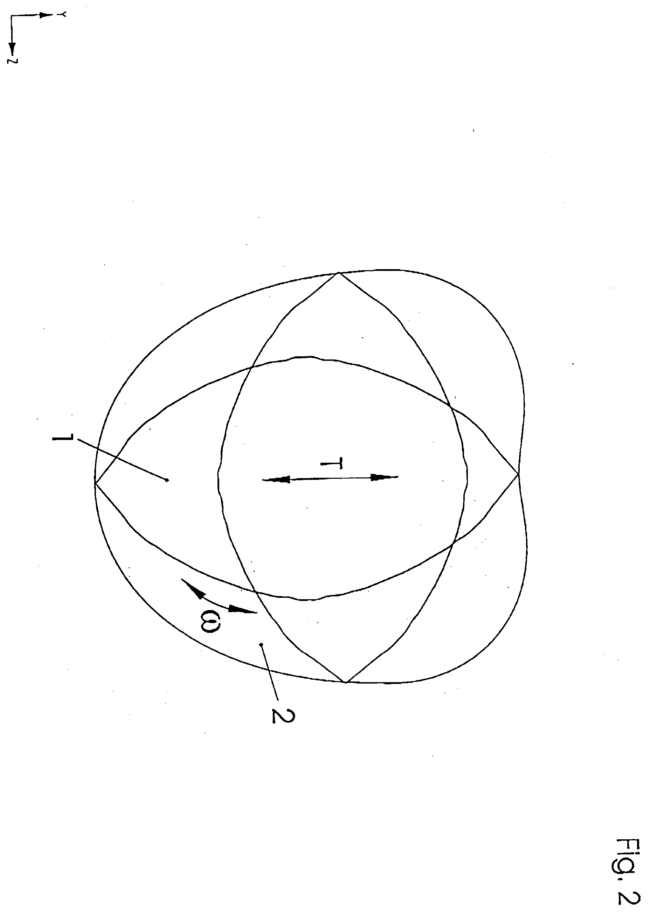

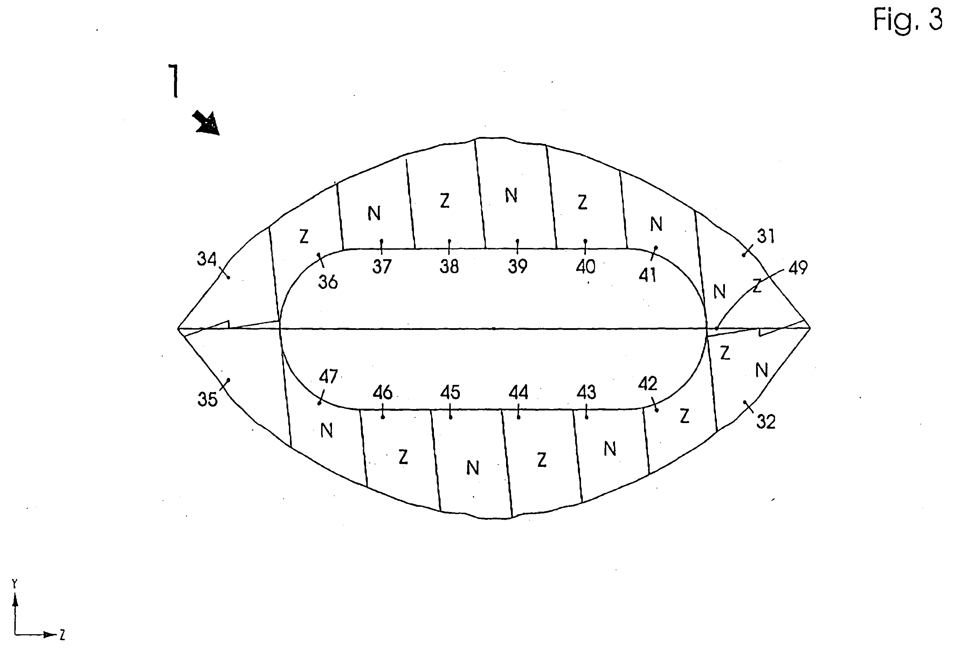

Figure 1 shows schematically a device in accordance with the invention. A rotor 1 is provided in a rotor chamber 2. At both sides of the rotor chamber means 3 for generating a stator magnetic field inside the rotor chamber 2 is provided. The device comprises in this example further a cooling part 4 and electric supply lines 5 coupling the means 3 to a current supply 6. The left side of the figure shows the outside of means 3. On the right side four electro-magnets 3a, 3b, 3c and 3d are shown. Of electro-magnets 3a and 3d the supply lines are also schematically shown. The four magnets generate in this example in the rotor chamber a magnetic field having four poles N, Z which extend in the rotor chamber 2. In this example the rotor generates also a rotor magnetic field, the south and north poles of which are indicated by Z' and N'. The interaction between the stator and rotor magnetic field causes the rotor to move in the direction indicated by arrows 10. In this figure only four magnets are shown, in examples the number of electromagnets is much larger (in the order of 50- 300) which enables to generate a complex stator magnetic field. In figure 1 an x-direction (perpendicular to the plane of movement of the rotor and the general dimension of the rotor and rotor chamber, as well as an y- and z-direction is indicated. For better comparison of the figures 2, 3 4, 5, 7 and 8 the same direction as also indicated in these figures.

Figure 2 shows schematically the movement of rotor 1 in the rotor chamber 2. Two positions are shown. The movement of the rotor in the rotor chamber comprises a rotational component (indicated in figure 2 by ω) as well as a cyclic translational movement (indicated in figure 2 by T). Using e.g. a computer program the position and movement of the rotor as well as forces acting on the rotor inside the rotor chamber during the cyclic movement can be calculated, which calculation provides for the required force field, more in particular the rotational as well as the translational component of the force field which is during the cyclic movement to be exerted on the rotor. For a given magnetic rotor field originating in the rotor the configuration of the rotor magnetic field vis-a-vis the stator, i.e. inside the rotor chamber can be established at any position of the rotor. Basically the centre of mass as well as the angle to the vertical can be established. Furthermore the forces acting on the rotor by the fluids or gasses in the rotor chamber can be calculated. The data on the position of the rotor gives the acceleration of the rotor (in the ω and in the T direction). This gives the forces to move the rotor 1, when the rotor is not subject to other forces. The force field (in time as well as in position) required to move the rotor in the appropriate curvilinear movement are thus calculable. Preferably, as will be explained below, measurements are taken which indicate the instantaneous position of the rotor, and information on this position is used to fine-tune the force field. The total force exerted on the rotor comprises a component which accomplishes the rotational movement and the rotational movement, i.e. the curvilinear movement in toto.

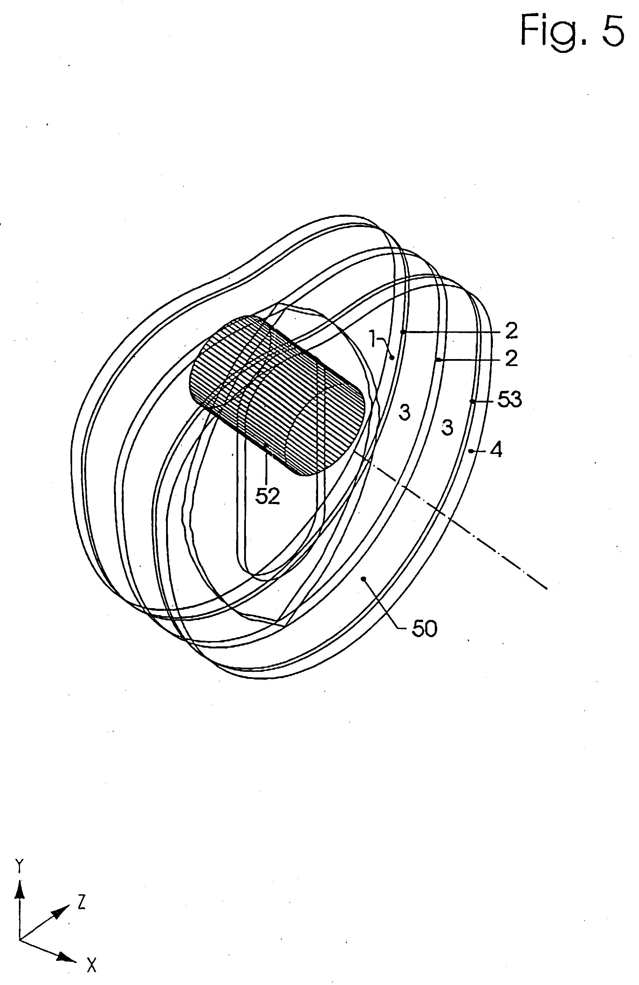

Figure 3 shows an example of a rotor 1 having means for generating a rotor magnetic field. In this example the rotor comprises permanent magnets 31, 32, 34 and 35 at the ends of the rotor and electromagnets 36 to 47 along the sides of the rotor. The permanent magnets provide in operation mainly for the rotational component of the movement, whereas the electromagnets provide for the translational component of the movement. In this example the strength of the magnetic poles (N-Z in figure 3) is greatest at the middle of the sides (between electromagnets 38-39 and 46-45) and decreases towards the ends of the rotor (electromagnets 40-41 etc.). Such arrangement is particularly suited to provide for a curvilinear movement. The magnets are slightly tilted in respect of the longitudinal plane 49. Such a tilt (in the order of 2 to 10 degrees) provides for a slight tilt in the magnetic fields generated by the (electro)magnets in respect of the longitudinal axis. This enables to generate forces having a preferred direction (in the general direction of movement) and reduces the rotational losses. The current through opposite electromagnets at either side of the longitudinal plane 49 is such that they generate magnetic poles of opposite sign. Means are provided, for instance electric supply lines in a fixed axle 52 (see figure 5), so that the direction of the currents through the electromagnets and thereby the sign of the poles is every half of a cycle (twice per cylce) reversed.

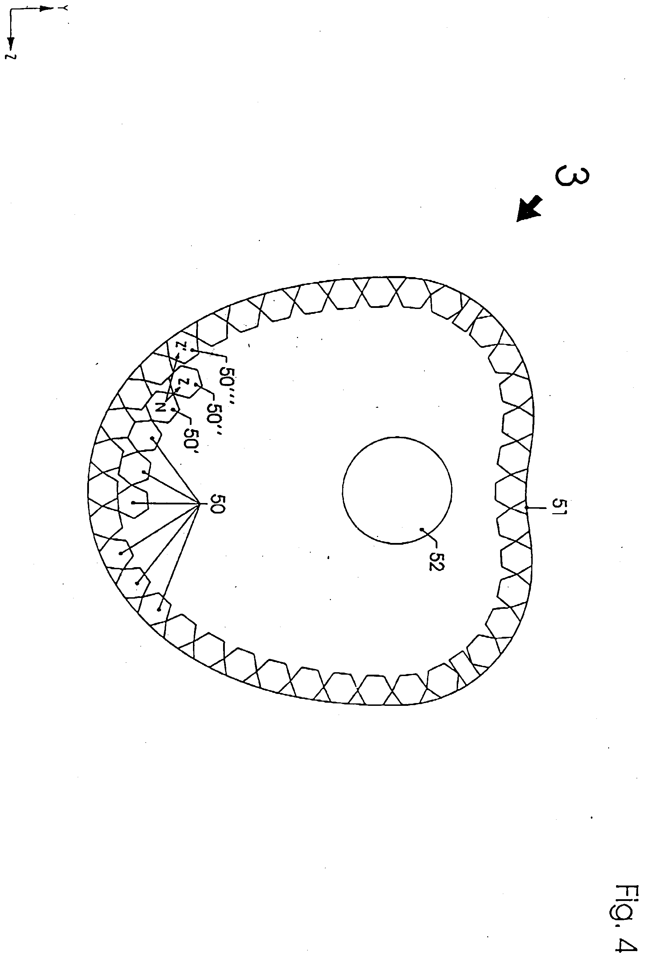

Fig. 4 shows schematically in a sectional view a number of electromagnets 50 of the means for generating a stator magnetic field. The electromagnets extend (see figure 1) along the x-direction. Coupled to the electromagnets are means for supplying them with currents (see figure 1, supply lines 5). These electromagnets are positioned outside the rotor chamber the outline of which chamber is indicated by line 51. Axle 52 (see figure 5) is indicated. In operation the rotor moves inside the rotor chamber, and the magnets and electromagnets 31 to 48 and thus the magnetic fields associated with these passes past the electromagnets 50. In the device according to the invention the electromagnets are in operation activated to generate a varying stator magnetic field, which interacts with the rotor magnetic field such that a force field is created which corresponds to the movement of the rotor. A very simple example of a varying field is indicated in the figure 4. At time t the electromagnet 50' generates a north pole, while electromagnet 50'' generates a south pole. The magnetic field is then directed from electromagnet 50' to 50''. When, at a later time t', the electromagnet 50''' generates a south pole, the direction of the field is changed. Such changes change the force field acting on the rotor. This force field has both a rotational component as well as a translational component which allows for a cardioidal movement of the rotor with optimal efficiency. The invention allows the forces exerted on the rotor to be created in situ, and in phase with the movement. The design can be very compact and the loss of energy resulting from the fact that a force must be transmitted from outside of the rotor chamber to the rotor can be reduced. Furthermore a device in accordance with the invention does not need moving parts which are present in the rotor chamber as well as outside the rotor chamber. Such moving parts are a source of friction and of other problems, such as leakages.

Figure 5 shows in more detail in perspective a device as shown in figure 1. Rotor 1 is positioned in rotor chamber 2. It moves around a stationary guiding axle 52. Inside the guiding axle electrical supply lines are provided which supply currents to the electromagnets in the rotor. The electromagnets 50 are comprises in the means 3 for generating a stator magnetic field. On the side of the means 3 remote from the rotor chamber cooling means 4 are provided. In between the cooling means 4 and the means 3 a layer 53 of powder or liquid comprising a magnetisable material is provided. The purpose of this layer is as follows:

The electromagnets 50 of the means 3 generate a stator magnetic field by which a force field is generated. The efficiency of this force field is dependent on synchronising the field generated by the electromagnets to the movement and position of the rotor. The field is composed of sub-fields generated by the electromagnets, so they have to be synchronised to each other. The better the fields generated by the electromagnets can be synchronised each other, the better the quality of the stator field, the greater the efficiency of the device. Forming magnetic couplings between electromagnets, i.e. closing the magnetic circuit between two or more electromagnets via the layer comprising magnetic material provides for excellent synchronisation between fields generated by said electromagnets. However, as the rotor moves in the rotor chamber, different electromagnets should be activated and magnetically coupled.

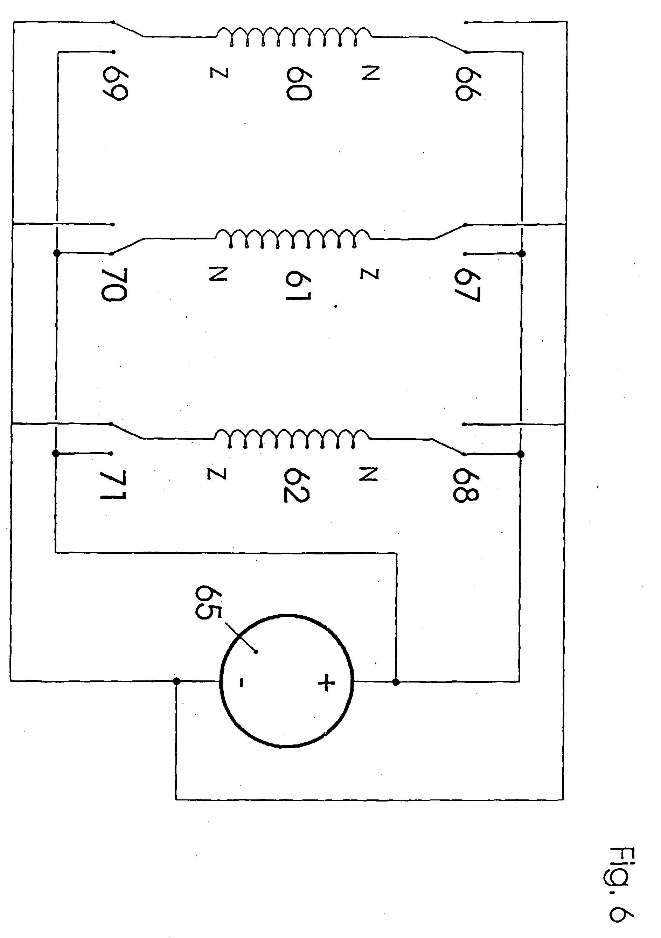

Figure 6 shows schematically and simplified a number of electromagnets. Electromagnets 60, 61 and 62 each generate in operation a magnetic field. They are coupled a current supply 65, and current switches 66 to 71. By selecting the switches the position and the number of north and south poles of the array of electromagnets can be chosen to create a desired stator magnetic field. As explained above magnetic coupling between two electromagnets will increase and synchronize the force fields. However,

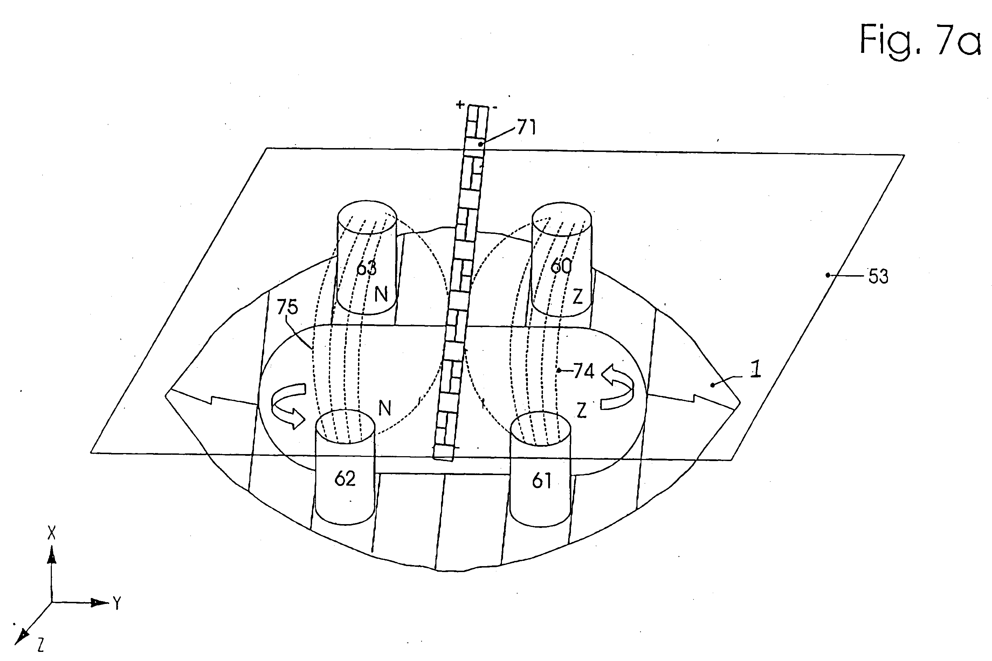

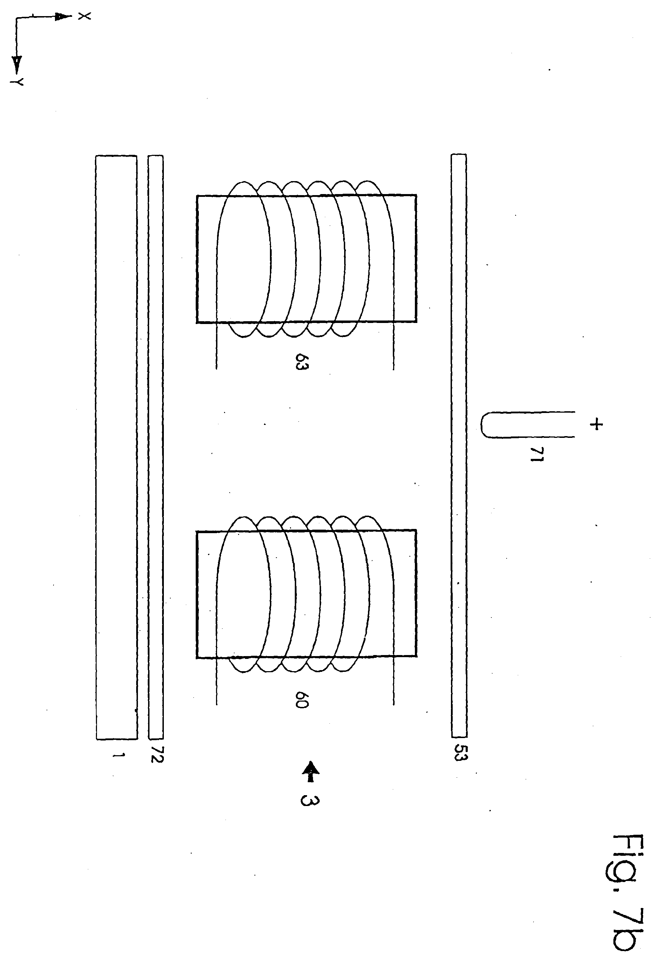

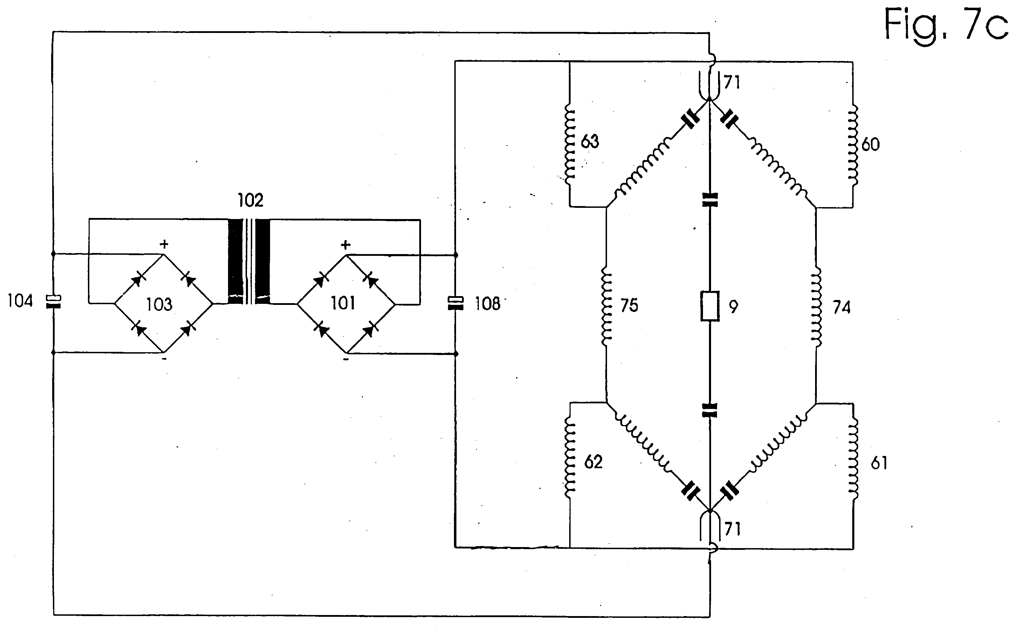

Figures 7a and 7b show a preferred embodiment of means for selectively providing magnetic couplings between electromagnets. Close to or in contact with the electromagnets 60, 61, 62, 63 a layer 53 comprising a powder or liquid of magnetisable material is provided. The magnetisable material comprising for instance iron powder. The layer 53 provides for magnetic couplings between electromagnets. Each of the electromagnets is provided with a coil. The coils are connected to each other by means of connections. When coils are electrically connected to each other, they are magnetically coupled to each other via layer 53. When the electrical connection 67 is removed the magnetic coupling is still present. To break the magnetic couplings means 71 are provided. Said means 71, which in this example comprise needles or hairs at high electrical potential, close to, but not touching the layer 53 provide in operation strong electrical fields in the order of 20-100 kVolt over a gap between the means 71 and the layer in the order of 10-200 microns. Capacitive coupling between means 71 and layer 53 induce in the layer strong electrical fields. Such fields have been found to prevent the layer 53 from establishing magnetic coupling. Therefor, when means 71 is activated, electromagnets 60 and 61 are magnetically decoupled. The means 53 can be accurately, reliably and fast selectively activated. Figure 7a shows that the magnetic lines do run from electromagnet 60 to electromagnet 61, but not, or in a much smaller degree from electromagnet 60 to 63. These electromagnets are thus decoupled, because of the barrier created by means 71. 72 denotes a side wall of the rotor chamber in which rotor 1 is present. In figure 7c schematically the electrical circuit corresponding to figure 7b is given. In this figure 101 shows schematically the DC current supply to the electromagnets , 102 a high-voltage transformer, 103 a DC voltage supply to the means 71, 60 and 61 electromagnetic of which the coils are in series, 62 and 63 electromagnets of which the coils are in series. Coils 60 and 61 are coupled by magnetic coupling 74, which is basically an inductive coupling through the layer 53, as are electromagnets 63 and 64 by coupling 75. The coils 60 and 63 would be also coupled inductively, but for the capacitance effect generated by means 71. Basically the capacitance and the inductance form a rejection filter, which decouples the electromagnets 60 and 63 from each other. The provision of the layer 53 has the added advantage that the fields of the electromagnets do not, or only to a strongly reduced degree extend outside the layer 53. The stray fields generated by the electromagnets are thus reduced, or in other words, the layer 53 acts as an magnetic shield. Stray fields can negatively interfere with electronic devices placed in the vicinity of the device from which the stray fields originate. Reduction of the stray fields means that such problems are reduced, enabling electronic devices to be placed closer to the device, thus reducing the effective space needed for the device. Preferably the layer 53 does not come into contact with gases or materials which could react with the layer, since such reactions could alter the composition of the layer, and thereby reducing the coupling efficiency of the layer. Preferably inside the stator an inert medium is provided, preferably Helium, which is an inert gas and has excellent electrical properties.

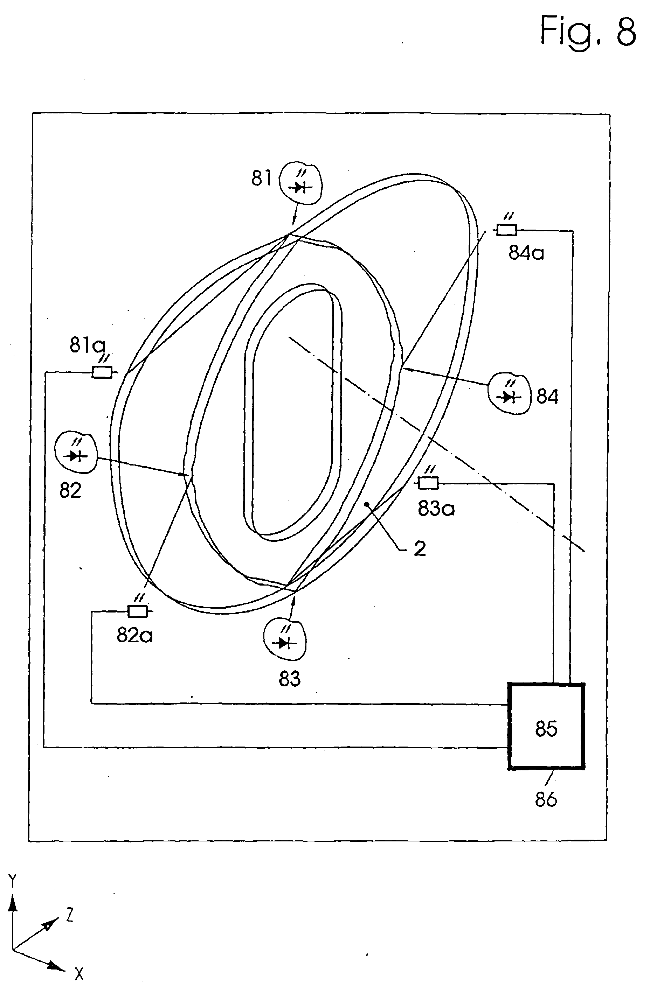

Figure 8 shows schematically means for measuring in operation the position of the rotor and the stator with respect to each other. Four light sources 81, 82, 83 and 84, emit different light signals, in this preferred example light of different colour. The light is reflected on the rotor 1 inside the rotor chamber 2. Four receiving means 81a, 82a, 83a and 84a, each tuned to the signals emitted by the corresponding light source, receive light and send signals to a device 85. This device calculates from the signals the position of the rotor and provides a measurement signal 86. Such signal is preferably sent to means 6 (Figure 1), which uses the information of the measurement to influence, if needed, the stator magnetic field, e.g. in the strength or timing of the fields generated by the electromagnets. Preferably the means for measuring comprise optical sensors, e.g. for locally measuring the distance between the rotor and stator. Using optical sensors has the advantage that the relative position of rotor and stator is measured by means of a non-contact measurement. Contact measurement may induce damages to rotor and/or stator thus reducing the efficiency and/or life-time of the device. Electrical non-contact measurement may induce stray signals which may impair the functioning of the device. Using different light signals and receiving means tuned to these signals (by for instance placing a filter in front of the means 81a etc, which only transmits light of the colour emitted by light sources 81 etc) has the advantage that stray light emitted by light source 82 does not influence the measurement of receiving means 81a, stray light emitted by light source 81 does not influence the measurement of receiving means 82a etc. The accuracy of the measurements is thereby greatly increased. In the example the light is reflected of the edge of the rotor. Two of the light source and corresponding receiving means are positioned such that the signal is received by the receiving means when the end of the rotor is very close to the light source. This has the advantage that even a very small change in the position of the rotor causes a relatively large change in the position of the light beam near the receiving means. This increases the accuracy of the measurement. Preferably a number of light sources and receiving means, for instance and preferably four, are provided which are positioned such that the ideal rotor position corresponds to a situation where the light signals are simultaneously received by the receiving means. This allows for an increased speed of measurement and accuracy and simplicity of the data analysis.

Optical fibres are preferred to emit the signal and receive the signal. For instance laser light is coupled into an optical fibre the end of which constitutes light source 81. One end of second optical fibre forms part of receiving means 82, the other end being coupled to a light measuring device. The lasers and light measuring devices are in such embodiments placed at some distance of the rotor chamber, which has the advantage that there can be no interference of electric and magnetic fields generated in and near the rotor chamber on the measurement.

In will be clear that within the framework of the invention many variations are possible and the invention is not restricted to the above given exemplary embodiments.

It is remarked that in the above a device is described in which a rotor in a stator is driven by means of magnetic fields. The principles of the invention as regards to the selection means for selectively providing magnetic couplings between the electromagnets, the selection being dependent on the position of the rotor in the rotor chamber are also applicable to a device for generating electricity in which a rotor, having means for generating magnetic fields rotates in a curvilinear movement and the stator is provided with electromagnets in which in operation currents are induced due to the movement of the rotor. By providing selection means for selectively providing magnetic couplings between the electromagnets, the selection being dependent on the position of the rotor in the rotor chamber in particular by providing selection means comprising a layer of powder or liquid comprising magnetisable material coupled to or in close proximity to a number, or preferably each of the electromagnets and means to selectively create magnetic barriers in the layer a very efficient generating of electrical energy is achieved. Furthermore in a generator in which a rotor, having means for generating magnetic fields rotates in a curvilinear movement and the stator is provided with electromagnets in which in operation currents are induced due to the movement of the rotor, means for measuring in operation the position of the rotor and the stator with respect to each other and means for providing a measurement signal comprising information on the position of the rotor in the rotor chamber as described above are particularly suited and provide similar advantages.

## Claims

1. Device comprising a rotor in a rotor chamber in a stator, the rotor performing in operation a cyclic movement which movement comprises a rotational component (ω) and a translational component (T), characterised in that the rotor is provided with means for generating a rotor magnetic field, and the stator is provided with means for generating a stator magnetic field which extends in the rotor chamber, and the device is provided with means for varying the stator magnetic field for creating a force field applied to the rotor which field is synchronous with the movement of the rotor, the force field comprising a rotational as well as a translational component.

2. Device as claimed in claim 1, characterised in that the means for generating a stator magnetic field comprises a number of electromagnets for generating magnetic poles and selection means for selectively providing magnetic couplings between the electromagnets, the selection being dependent on the position of the rotor in the rotor chamber.

3. Device as claimed in claim 2, characterised in that selection means comprise a layer of powder or liquid comprising magnetisable material coupled to or in close proximity to a number, or preferably each of the electromagnets and means to selectively create electromagnetic barriers in the layer.

4. Device as claimed in claim 3, characterised in that the magnetisable material exhibits a small index for the hysterisis loss.

5. Device as claimed in claim 3 or 4, characterised in that the device is provided with an inert medium in contact with the layer.

6. Device as claimed in claim 3, 4 or 5, characterised in that the means to selectively create electromagnetic barriers comprise means to create electric fields in the vicinity of the layer.

7. Device as claimed in any of the preceding claims, characterised in that the means for generating a rotor magnetic field comprise permanent magnets at the ends of the rotor and a number of electromagnets at the sides of the rotor, and means for reversing the currents through the electromagnets.

8. Device as claimed in claim 7, characterised in that the number of electromagnets of the rotor are adapted to generate in operation a number of pairs of magnetic poles along the sides of the rotor, the strength of the pairs decreasing from the centre of the side of the rotor to an end of the rotor.

9. Device as claimed in any of the preceding claims, characterised in that the stator is provided with means for measuring the position of the rotor and means for providing a measurement signal comprising information on the position of the rotor in the rotor chamber, and with means for supplying the measurement signal to the means to vary the stator magnetic field.

10. Device as claimed in claim 9, characterised in that the means for measuring the position of the rotor comprise optical sensors.

11. Device as claimed in claim 9, characterised in that the optical sensors comprise means for emitting distinguishable light signals and receiving means for receiving said light signals.

12. Device as claimed in claim 11, characterised in that the light signals are of different colour and the receiving means are sensitive to said colours.

13. Device as claimed in claim 10, 11 or 12, characterised in that the optical sensors comprise optical fibres.

14. Device as claimed in any of the claims 9 to 13, characterised in that the device comprises correction means to correct the relative position of the rotor in dependence on the measurement signal.
